# EUROPÄISCHE PATENTANMELDUNG

(11) **EP 3 819 448 A1**
(43) Veröffentlichungstag der Anmeldung: **12.05.2021**
(21) Anmeldenummer: 20202698.5
(22) Anmeldetag: 20.10.2020
(51) Int. Cl.: E05B 67/00, B62H 5/00, E05B 73/00

(54) **SCHLOSS**

(30) Priorität: 06.11.2019 DE 102019129960
(71) Anmelder: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(57) **Zusammenfassung**

Ein Schloss, insbesondere Fahrradschloss, umfasst einen Schlosskörper, ein außerhalb des Schlosskörpers befindliches Verriegelungselement und einen außerhalb des Schlosskörpers befindlichen Verriegelungsmechanismus zur Aufnahme und Verriegelung des Verriegelungselements. Der Verriegelungsmechanismus ist durch einen ersten Seilabschnitt mit dem Schlosskörper verbunden und das Verriegelungselement ist durch einen zweiten Seilabschnitt mit dem Schlosskörper verbunden ist, wobei die Länge eines außerhalb des Schlosskörpers verlaufenden Teils wenigstens eines der Seilabschnitte veränderbar ist.

## Beschreibung

Die Erfindung betrifft ein Schloss, insbesondere ein Fahrradschloss, mit einem Schlosskörper, einem Verriegelungselement und einem Verriegelungsmechanismus zur Aufnahme und Verriegelung des Verriegelungselements.

Ein solches Schloss kann insbesondere dazu genutzt werden, ein Fahrrad zwischen zwei Fahrten gegen ein unbefugtes Wegfahren oder Wegnehmen zu sichern. Derartig zu verwendende Schlösser sind meist gesondert von dem Fahrrad vorgesehen und bei der Fahrt mitzuführen, um das Fahrrad während eines Abstellens gegen Diebstahlversuche schützen zu können. Dies kann beispielsweise mittels U-Bügel-Schlösser erfolgen, die als Verriegelungselement einen U-förmigen Bügel aufweisen, welcher wahlweise in dem Schlosskörper verriegelbar oder von diesem lösbar ist. Ferner können sogenannte Gelenk- oder Faltschlösser mit einem am Schlosskörper wahlweise verriegelbaren Gelenkstabbügel, der mehrere schwenkbar miteinander verbundene Gelenkstäbe aufweist, zur Sicherung von Fahrrädern Verwendung finden. Bei solchen Schlössern kann im Verriegelungszustand mittels des jeweiligen Bügels eine Schlaufe gebildet werden, durch welche das Fahrrad sicher mit einem Gegenstand, beispielsweise einem Fahrradständer oder einer Laterne, verbunden werden kann. Auch Seil- oder Kettenschlösser mit aneinander verriegelbaren Enden können dazu genutzt werden, ein Fahrrad an einem ortsfesten Gegenstand zu sichern.

Häufig und insbesondere bei sportlich genutzten Fahrrädern, wie Rennrädern oder Mountainbikes, stellt das gesonderte Mitführen eines Schlosses jedoch einen ungewünschten Aufwand dar. Um den Transport der Schlösser zu erleichtern, können daher an Fahrradrahmen anbringbare Halterungen vorgesehen sein. Solche Halterungen beanspruchen jedoch einen ausschließlich dafür vorzusehenden Platz am Fahrradrahmen, der dann nicht mehr zum Anbringen beispielsweise eines Flaschenhalters zur Verfügung steht. Zudem weisen gängige Fahrradschlösser meist ein verhältnismäßig hohes Gewicht auf, um einen ausreichenden Diebstahlschutz bieten zu können. Rahmenschlösser, welche direkt an einem Fahrradrahmen ausgebildet sind und eine Sicherung des Fahrrads ermöglichen, indem ein Bügel durch die Speichen des hinteren Laufrads des Fahrrads geführt wird, um dessen Drehbewegung einzuschränken, erfordern wiederum spezielle Konstruktionen des Fahrradrahmens, so dass Fahrräder und insbesondere Rennräder in der Regel nicht mit solchen Schlössern nachrüstbar sind. Darüber hinaus können Rahmenschlösser zwar ein unmittelbares Wegfahren mit dem Fahrrad verhindern, das Fahrrad jedoch nicht mit einem ortsfesten Gegenstand verbinden. Solche Rahmenschlösser können daher keinen Schutz gegen ein Wegnehmen bzw. Verladen des Fahrrads bei späterem Aufbrechen des Schlosses bieten.

Es ist daher eine Aufgabe der Erfindung, ein Schloss zu schaffen, welches einen Schutz von Fahrrädern gegen unbefugte Wegnahme bietet und kompakt und komfortabel zu transportieren sowie einfach und schnell zu bedienen ist.

Diese Aufgabe wird gelöst durch ein Schloss mit den Merkmalen des Anspruchs 1 und insbesondere dadurch, dass sich das Verriegelungselement und der Verriegelungsmechanismus außerhalb des Schlosskörpers befinden, wobei der Verriegelungsmechanismus durch einen ersten Seilabschnitt mit dem Schlosskörper verbunden ist und das Verriegelungselement durch einen zweiten Seilabschnitt mit dem Schlosskörper verbunden ist, wobei die Länge eines außerhalb des Schlosskörpers verlaufenden Teils wenigstens eines der Seilabschnitte veränderbar ist.

Indem der Verriegelungsmechanismus und das Verriegelungselement außerhalb des Schlosskörpers angeordnet sind, kann der Schlosskörper besonders kompakt ausgebildet werden, da dieser, anders als bei den meisten gängigen Fahrradschlössern, keinen Raum zur Anordnung insbesondere der Bauteile des Verriegelungsmechanismus zur Verfügung stellen muss.

Vielmehr kann der Schlosskörper vornehmlich dazu genutzt werden, zumindest einen Teil des wenigstens einen Seilabschnitts und insbesondere beider Seilabschnitte aufzunehmen oder eine Anbindung für die Seilabschnitte und dadurch letztlich für den Verriegelungsmechanismus und das Verriegelungselement zu bieten. Dazu können der erste Seilabschnitt und der zweite Seilabschnitt insbesondere in den Schlosskörper hineinlaufen, sodass der Schlosskörper einen Speicher für die Seilabschnitte bilden kann, aus welchem die Seilabschnitte zur Verlängerung der Länge ihrer außerhalb des Schlosskörpers verlaufenden Teile wahlweise herausgezogen werden können. Dies kann es beispielsweise ermöglichen, während eines Transports einen Großteil des oder jedes Seilabschnitts innerhalb des Schlosskörpers anzuordnen, um den Verriegelungsmechanismus und das Verriegelungselement möglichst nah an dem Schlosskörper positionieren und das Schloss in eine kompakte und die Fahrt nicht behindernde Anordnung bringen zu können.

Indem das Verriegelungselement von dem Verriegelungsmechanismus aufgenommen und an oder in dem Verriegelungsmechanismus verriegelt werden kann, können auch die beiden Seilabschnitte sicher miteinander verbunden werden. In diesem verbundenen Zustand von Verriegelungsmechanismus und Verriegelungselement kann das Schloss folglich eine geschlossene Schlaufe bilden, wobei deren Größe durch eine Veränderung der Länge eines außerhalb des Schlosskörpers verlaufenden Teils wenigstens eines der Seilabschnitte flexibel an die jeweiligen Gegebenheiten angepasst werden kann, um beispielsweise ein Fahrrad mit einem ortsfesten Gegenstand zu verbinden.

Die Länge des außerhalb des Schlosskörpers verlaufenden Teils eines Seilabschnitts kann beispielsweise dadurch veränderbar sein, dass ein innerhalb des Schlosskörpers verlaufender Teil des Seilabschnitts aus diesem herausziehbar ist. Ferner ist es möglich, den Seilabschnitt elastisch auszubilden, um die gewünschte Schlaufengröße erreichen zu können. In beiden Fällen kann die Sicherung des Fahrrads äußerst schnell erfolgen, indem das jeweilige mit dem Seilabschnitt verbundene Element durch eine Veränderung der Länge des außerhalb des Schlosskörpers verlaufenden Teils des Seilabschnitts um einen Gegenstand geführt und der Verriegelungsmechanismus und das Verriegelungselement daraufhin miteinander verbunden werden.

Insbesondere kann der Seilabschnitt ein Abschnitt eines Drahtseils sein, welches innerhalb des Schlosskörpers angeordnet ist und sich aus diesem herauserstreckt. Ein solches Drahtseil kann einen verhältnismäßig geringen Durchmesser, beispielsweise zwischen 1,6 mm und 2,4 mm, aufweisen, um eine besonders kompakte Ausbildung des Schlosses bei möglichst geringem Gewicht erreichen zu können. Insbesondere bei einer Verwendung des Schlosses für sportlich genutzte Fahrräder, die häufig nur während kurzer Pausen und im Sichtbereich des Fahrers, beispielsweise während des Besuchs eines Cafes, abgestellt werden, kann dadurch ein ausreichender Schutz vor einem unmittelbaren und unbefugten Wegfahren bzw. Wegnehmen bei minimalem Gewicht des Schlosses erreicht werden. Ferner kann der Seilabschnitt durch eine Kette, insbesondere eine feingliedrige Kette, gebildet oder zumindest teilweise aus einem Kunststoff gefertigt sein.

Ein solches Schloss kann folglich kompakt und mit geringem Gewicht ausgebildet sein und erlaubt eine schnelle und einfache Bedienung, insbesondere zur kurzfristigen Sicherung eines Fahrrades. Ferner kann ein solches Schloss an einem Fahrradrahmen befestigt werden, um eine einfache und komfortable Transportmöglichkeit zu bieten. Insbesondere kann das Schloss dabei mittels in zur Befestigung eines Flaschenhalters vorgesehene Bohrungen eingeschraubter Befestigungsschrauben an einem Fahrradrahmen angebracht werden. Dabei kann die kompakte Ausbildung des Schlosses eine gemeinsame Anbringung mit einem Flaschenhalter und eine Anordnung zwischen dem Fahrradrahmen und dem Flaschenhalter ermöglichen, so dass das Schloss ohne merkliche Einschränkungen in der Nutzung des Fahrrades mitgeführt werden kann, wie nachfolgend noch erläutert wird.

Weiterbildungen der Erfindung sind den abhängigen Ansprüchen, der Beschreibung und den Figuren zu entnehmen.

Gemäß einigen Ausführungsformen kann die Länge eines außerhalb des Schlosskörpers verlaufenden Teils jedes Seilabschnitts veränderbar sein. Dadurch kann die Größe der durch das Verbinden des Verriegelungsmechanismus mit dem Verriegelungselement zu bildenden Schlaufe schnell und flexibel angepasst werden. Beispielsweise können das Verriegelungselement und der Verriegelungsmechanismus dadurch ausgehend von einem Fahrrad bzw. dem daran angebrachten Schlosskörper hinter einem ortsfesten Gegenstand wie einer Laterne oder einem Zaun zusammengeführt und dort miteinander verbunden werden, ohne dass eines der Elemente vollständig um den zur Sicherung genutzten Gegenstand herumgeführt werden muss.

Es kann vorgesehen sein, dass der oder jeder Seilabschnitt zur Veränderung der Länge seines außerhalb des Schlosskörpers verlaufenden Teils aus dem Schlosskörper herausziehbar ist. Der Schlosskörper kann somit gewissermaßen einen Speicher für den oder jeden Seilabschnitt bilden, aus welchem der oder jeder Seilabschnitt zum Bilden einer Schlaufe mit gewünschter Größe herausziehbar ist. Die gewünschte Schlaufengröße kann dabei durch eine einfache Zugbewegung und entsprechend schnell und unkompliziert erreicht werden.

Gemäß einigen Ausführungsformen kann der oder jeder Seilabschnitt mit einer innerhalb des Schlosskörpers angeordneten Einzieheinrichtung zum Einziehen des Seilabschnitts verbunden sein. Eine solche Einzieheinrichtung kann eine in den Schlosskörper hinein gerichtete Kraft auf den jeweiligen Seilabschnitt ausüben, so dass der Seilabschnitt beispielsweise nach einer Verwendung des Schlosses zur Sicherung eines Fahrrades automatisch in den Schlosskörper hineingezogen werden kann und sich die Länge seines außerhalb des Schlosskörpers verlaufenden Teils verringert. Das mit dem jeweiligen Seilabschnitt verbundene Element, der Verriegelungsmechanismus oder das Verriegelungselement, kann durch dieses Einziehen des Seilabschnitts möglichst nahe an dem Schlosskörper angeordnet werden, so dass das Schloss beispielsweise zu einem Transport in eine kompakte und die Fahrt nicht behindernde Anordnung gebracht werden kann.

Die Einzieheinrichtung kann dazu ausgebildet sein, den oder jeden Seilabschnitt bei einem Lösen der Verbindung zwischen dem Verriegelungselement und dem Verriegelungsmechanismus automatisch oder aufgrund einer von dem Nutzer vorzunehmenden Handlung in den Schlosskörper einzuziehen. Beispielsweise kann das Einziehen infolge eines ruckartigen Ziehens an einem Seilabschnitt erfolgen oder es kann ein von einem Nutzer zu drückender Knopf an einer Außenseite des Schlosskörpers vorgesehen sein, um das Einziehen des Seilabschnittes zu starten.

Die Einzieheinrichtung kann eine Spule zum Aufwickeln des wenigstens einen Seilabschnitts und insbesondere eine erste Spule zum Aufwickeln des ersten Seilabschnitts und eine zweite Spule zum Aufwickeln des zweiten Seilabschnitts aufweisen. Dadurch können der wenigstens eine Seilabschnitt und insbesondere beide Seilabschnitte grundsätzlich innerhalb des Schlosskörpers aufgewickelt angeordnet sein, wobei die Länge des jeweiligen außerhalb des Schlosskörpers verlaufenden Teils durch ein Herausziehen des Seilabschnitts aus dem Schlosskörper und ein dadurch bedingtes Abwickeln von der Spule in einfacher Weise vergrößert werden kann. Ferner ermöglicht das Aufwickeln der Seilabschnitte deren kompakte Anordnung innerhalb des Schlosskörpers und dadurch die Aufnahme verhältnismäßig langer Seilabschnitte zum Bilden großer Schlaufen bei möglichst geringer Ausdehnung des Schlosskörpers.

Es kann vorgesehen sein, dass die oder jede Spule eine Feder umfasst, deren Federkraft einem Abwickeln des zugeordneten Seilabschnitts entgegenwirkt, wobei die Feder insbesondere als Spiralfeder ausgebildet sein kann. Durch eine solche Feder kann in einfacher Weise ein automatischer Einzug des Seilabschnitts in den Schlosskörper hinein erreicht werden. Insbesondere können die oder jede Spule dabei als Federspulen ausgebildet sein, so dass die Spulen beispielsweise direkt von jeweiligen Spiralfedern gebildet sein können, um welche die Seilabschnitte aufgewickelt sind.

Die Wicklungen des oder jedes aufgewickelten Seilabschnitts können in einer jeweiligen Wicklungsebene liegen. Beispielsweise können die Wicklungen spiralförmig um eine Achse verlaufen, die insbesondere einer Drehachse entsprechen kann, um welche die jeweilige Spule verdrehbar ist, und die normal zu der Wicklungsebene ausgerichtet sein kann. In Richtung dieser Achse bzw. senkrecht zu der Wicklungsebene kann die Ausdehnung des aufgewickelten Seilabschnitts somit minimiert werden und insbesondere im Wesentlichen durch den Durchmesser des Seilabschnitts vorgegeben sein bzw. diesem entsprechen. Dabei können beide Seilabschnitte in einer gemeinsamen Wicklungsebene aufgewickelt sein, so dass auch der einen Speicher für die Seilabschnitte bildende Schlosskörper sich vornehmlich entlang der Wicklungsebene erstrecken und senkrecht zu dieser Ebene eine lediglich geringe Ausdehnung aufweisen kann. Dadurch kann der Schlosskörper flach und beispielsweise senkrecht zu der Wicklungsebene mit einer Ausdehnung von weniger als 2 cm ausgebildet sein. Insbesondere kann eine solche flache Ausbildung des Schlosskörpers ermöglichen, das Schloss platzsparend zwischen einem Flaschenhalter und einem Fahrradrahmen anzubringen, wobei der flache Schlosskörper lediglich eine geringfügige Verschiebung der Position des Flaschenhalters bedingt, ohne die sonstige Nutzung des Fahrrads zu beeinträchtigen.

Der Schlosskörper kann ein Gehäuse für die oder jede Spule und den oder jeden aufzuwickelnden Seilabschnitt bilden. Dabei kann das Gehäuse ein Gehäuserückteil und ein Gehäusevorderteil aufweisen, welche entlang einer Teilungsebene miteinander verbunden sind, wobei die Teilungsebene parallel zu der Wicklungsebene ausgerichtet sein oder der Wicklungsebene entsprechen kann. Insbesondere kann ein solches Gehäuse die innerhalb dessen angeordneten Komponenten vor einem externen Zugriff schützen und eine korrekte und kontrollierte Anordnung der oder jeder Spule sowie der aufgewickelten Seilabschnitte gewährleisten.

Ferner kann die Ausbildung des Gehäuses mit einem Gehäuserückteil und einem Gehäusevorderteil eine einfache und schnelle Montage des Schlosses ermöglichen. Durch die Teilung des Gehäuses entlang einer Teilungsebene, die parallel zu der Wicklungsebene ausgerichtet ist, können die vorgesehenen Spulen beispielsweise zunächst in das Gehäuserückteil eingesetzt und die jeweiligen Seilabschnitte aufgewickelt werden. Die Seilabschnitte müssen somit nicht kompliziert und zeitaufwendig in ein geschlossenes Gehäuse eingefädelt werden. Nach der Anordnung insbesondere sämtlicher Komponenten des Schlosskörpers in dem Gehäuserückteil kann die Montage durch einfaches Verbinden beider Gehäuseteile miteinander fertiggestellt werden, wobei die Gehäuseteile beispielsweise verschweißt oder alternativ oder zusätzlich kraft- und/oder formschlüssig miteinander verbunden werden können.

Gemäß einigen Ausführungsformen kann die Einzieheinrichtung eine Arretiereinrichtung umfassen, welche dazu ausgebildet ist, das Einziehen des oder jedes Seilabschnitts zu blockieren. Beispielsweise kann eine solche Arretiereinrichtung dazu vorgesehen sein, nach einem Herausziehen eines jeweiligen Seilabschnitts zur Veränderung der Länge dessen außerhalb des Schlosskörpers verlaufenden Teils und zum Bilden einer Schlaufe das Einziehen des Seilabschnitts zu blockieren, so dass der außerhalb des Schlosskörpers verlaufende Teil des Seilabschnitts bei der gewünschten Länge verbleibt. Dadurch ist es nicht notwendig, dass ein Nutzer während des Bildens einer Schlaufe zum Sichern eines Fahrrads einen dauerhaften Zug auf den Seilabschnitt ausübt, um ein Einziehen zu verhindern. Vielmehr können die Seilabschnitte komfortabel und insbesondere nacheinander bis zu einer gewünschten Länge aus dem Schlosskörper herausgezogen und daraufhin über den Verriegelungsmechanismus und das Verriegelungselement miteinander verbunden werden.

Das Blockieren des Einziehens des oder jedes Seilabschnitts mittels der Arretiereinrichtung kann wahlweise aussetzbar sein. Durch ein solches Aussetzen kann das Einziehen des jeweiligen Seilabschnitts erfolgen. Beispielsweise kann vor einem Transport des Schlosses bzw. vor einer Fahrt mit dem Fahrrad die Blockadewirkung der Arretiereinrichtung durch ein ruckartiges bzw. impulsartiges Ziehen an dem jeweiligen Seilabschnitt aufgehoben werden, so dass dieser mittels der Einzieheinrichtung in den Schlosskörper eingezogen und die Länge des außerhalb des Schlosskörpers verlaufenden Teils minimiert wird.

Die Arretiereinrichtung kann eine erste Blockiereinrichtung für den ersten Seilabschnitt aufweisen, welche dazu ausgebildet ist, den außerhalb des Schlosskörpers verlaufenden Teil des ersten Seilabschnitts bei einer vorgebbaren Länge zu blockieren, und die Arretiereinrichtung kann eine zweite Blockiereinrichtung für den zweiten Seilabschnitt aufweisen, welche dazu ausgebildet ist, den außerhalb des Schlosskörpers verlaufenden Teil des zweiten Seilabschnitts bei einer vorgebbaren Länge zu blockieren. Beispielsweise können die Blockiereinrichtungen die Länge des jeweiligen außerhalb des Schlosskörpers verlaufenden Teils des zugeordneten Seilabschnitts infolge eines kontinuierlichen Herausziehens aus dem Schlosskörper blockieren und ein Einziehen des Seilabschnitts in den Schlosskörper hinein verhindern. Dazu kann die Blockiereinrichtung ein aufgrund der von der Einzieheinrichtung auf den Seilabschnitt ausgeübten Kraft in Eingriff mit dem Seilabschnitt gehaltenes Blockierelement aufweisen, welches durch ein kurzfristiges Aussetzen dieser Kraft, beispielsweise durch ein ruckartiges Ziehen an dem Seilabschnitt, außer Eingriff mit dem Seilabschnitt gebracht werden kann, um diesen für ein Einziehen in den Schlosskörper freizugeben. Das Blockieren der Einzieheinrichtung mittels der Arretiereinrichtung kann dadurch, ähnlich wie bei Rollläden oder Kabeltrommeln, nach einem Herausziehen der Seilabschnitte zunächst automatisch und ohne durch einen Nutzer vorzunehmende Handlungen erfolgen und in einfacher Weise von dem Nutzer wahlweise aufgehoben werden.

Alternativ dazu können die Blockiereinrichtungen beispielsweise jeweilige innerhalb des Schlosskörpers und in der Nähe von Eintrittsöffnungen, durch welche die Seilabschnitte in den Schlosskörper hineinlaufen, angeordnete Blockierelemente aufweisen, welche insbesondere senkrecht zu einer geradlinigen Eintrittsrichtung der Seilabschnitte in den Schlosskörper hinein federvorgespannt sein können. Durch diese Federvorspannung der Blockierelemente können die aus dem Schlosskörper herausgezogenen Seilabschnitte zwischen dem jeweiligen Blockierelement und einer von dem Schlosskörper gebildeten Gehäuseinnenwand eingeklemmt werden, um den jeweiligen Seilabschnitt bei einer gewünschten Länge seines außerhalb des Schlosskörpers verlaufenden Teils zu blockieren. Um die Blockierwirkung derartig ausgebildeter Blockierelemente auszusetzen und die Seilabschnitte für ein Einziehen in den Schlosskörper freizugeben, kann ein Nutzer die Seilabschnitte beispielsweise nach dem Gebrauch des Schlosses zum Sichern eines Fahrrades in eine schräg zu der Eintrittsrichtung verlaufende Ausrichtung bringen, um mittels der Seilabschnitte eine entgegen der Federvorspannung wirkende Kraft auf die Blockierelemente zu übertragen. Dadurch können die Blockierelemente entgegen der Federvorspannung zurückgedrängt werden, sodass die freigegebenen Seilabschnitte kontrolliert in den Schlosskörper eingezogen und insbesondere um jeweilige Spulen aufgewickelt werden können. Gleichermaßen ist es möglich, an der Außenseite des Schlosskörpers einen, insbesondere einen jeweiligen, Knopf bzw. Taster vorzusehen, mittels dessen ein Nutzer solche federvorgespannte Blockierelemente wahlweise zurückdrängen kann, um die Seilabschnitte für ein Einziehen in den Schlosskörper freizugeben.

Der oder jeder Seilabschnitt kann innerhalb des Schlosskörpers in ein Seilende münden, welches mit einer um eine Drehachse verdrehbaren Spule verbunden ist. Dadurch können die Seilabschnitte auf den Spulen aufgewickelt und platzsparend innerhalb des Schlosskörpers angeordnet werden. Insbesondere können diese Spulen Bestandteile der vorstehend bereits erwähnten Einzieheinrichtung bilden und eine in den Schlosskörper hinein gerichtete Kraft ausübende Federn umfassen bzw. von solchen gebildet sein. Alternativ oder zusätzlich dazu kann eine solche Spule beispielsweise manuell von einem Nutzer verdrehbar sein, um ein Aufwickeln der Seilabschnitte zu ermöglichen.

Der erste Seilabschnitt kann innerhalb des Schlosskörpers in ein erstes Seilende münden, welches mit einer um eine erste Drehachse verdrehbaren ersten Spule verbunden ist, und der zweite Seilabschnitt kann innerhalb des Schlosskörpers in ein zweites Seilende münden, welches mit einer um eine zweite Drehachse verdrehbaren zweiten Spule verbunden ist. Dabei ist der erste Seilabschnitt folglich gesondert von dem zweiten Seilabschnitt vorgesehen, so dass die Seilabschnitte vollkommen unabhängig voneinander gehandhabt und die Längen deren außerhalb des Schlosskörpers verlaufenden Teile flexibel verändert werden können. Auch das Verriegelungselement und der Verriegelungsmechanismus können dadurch unabhängig voneinander bewegt werden, um die Seilabschnitte auf einfache Weise und schnell zu einer Schlaufe verbinden zu können.

Die erste Drehachse und die zweite Drehachse können parallel zueinander ausgerichtet sein und der Abstand der ersten Drehachse zu der zweiten Drehachse kann zwischen 60 mm und 70 mm, insbesondere etwa 65 mm, betragen. Der Abstand der ersten Drehachse zu der zweiten Drehachse kann somit, im Rahmen von Fertigungstoleranzen, gerade dem Normabstand zwischen den üblicherweise an einem Fahrradrahmen zur Befestigung von Flaschenhaltern vorgesehenen Gewindebohrungen entsprechen. Dies ermöglicht es, das Schloss bzw. den Schlosskörper mittels in solche Gewindebohrungen eingeschraubter und koaxial zu den Drehachsen verlaufender Befestigungsschrauben an einem Fahrradrahmen anzubringen. Dabei kann die ohnehin zu einer derartigen Montage des Schlosses benötigte Ausdehnung des Schlosskörpers zwischen den Bohrungen durch den daran angepassten Abstand der Drehachsen zueinander in vorteilhafter Weise zur Anordnung der aufgewickelten Seilabschnitte genutzt werden. Ferner kann das Aufwickeln der Seilabschnitte durch eine parallele Ausrichtung der Drehachsen in einer gemeinsamen Wicklungsebene erfolgen, so dass der Schlosskörper flach ausgebildet und mittels gemeinsamer Befestigungsschrauben gemeinsam mit einem Flaschenhalter zwischen dem Flaschenhalter und einem Fahrradrahmen angebracht werden kann, ohne dass sich dadurch die Position des Flaschenhalters beeinträchtigend verschiebt oder auf einen solchen verzichtet werden muss.

Es kann vorgesehen sein, dass die erste Spule und die zweite Spule über ein Verbindungselement, insbesondere eine Metallplatte, miteinander verbunden sind. Ein solches Verbindungselement kann insbesondere die korrekte Anordnung der Spulen zueinander sicherstellen und die Stabilität des Schlosses, insbesondere gegenüber Aufbruchsversuchen, erhöhen.

Gemäß einigen Ausführungsformen kann der Schlosskörper einen ersten Befestigungskanal und einen zweiten Befestigungskanal zum Durchführen von Befestigungsschrauben aufweisen, wobei der erste Befestigungskanal koaxial zu der ersten Drehachse und der zweite Befestigungskanal koaxial zu der zweiten Drehachse verlaufen kann. Insbesondere kann der Schlosskörper mittels der Befestigungsschrauben in zur Anbringung eines Flaschenhalters vorgesehenen Bohrungen an einem Fahrradrahmen befestigt werden. Dabei können die Befestigungskanäle insbesondere im Querschnitt kreisrund ausgebildet sein und einen Durchmesser zwischen 4 mm und 5 mm, bevorzugt zwischen 4,3 mm und 4,5 mm, aufweisen. Der Durchmesser der Befestigungskanäle kann somit dem Normdurchmesser der üblicherweise an einem Fahrradrahmen zur Befestigung von Flaschenhaltern vorgesehenen Gewindebohrungen entsprechen bzw. darauf abgestimmt sein, um die Anbringung des Schlosses in einfacher Weise mittels üblicher Befestigungsschrauben zu ermöglichen.

Gemäß einigen Ausführungsformen können Dichtungselemente zum Abdichten von Eintrittsöffnungen der Seilabschnitte in den Schlosskörper vorgesehen sein. Solche Dichtungselemente können beispielsweise ring- oder zylinderförmig ausgebildet und insbesondere aus einem Gummi oder einem weichen Kunststoff gefertigt sein, um den Eintritt von Schmutz oder Wasser in den Schlosskörper zuverlässig verhindern zu können. Insbesondere können die Dichtungselemente dazu ausgebildet sein, einen Kontaktabschnitt des mit dem jeweiligen Seilabschnitt verbundenen Elementes, des Verriegelungsmechanismus oder des Verriegelungselementes, formschlüssig aufzunehmen und dadurch an dem Schlosskörper zu halten. Dadurch kann einer Geräuschbildung aufgrund eines Aneinanderschlagens bzw. Klapperns der Elemente aneinander oder an dem Schlosskörper während eines Transports entgegenwirkt werden.

Der Verriegelungsmechanismus kann als Kombinationsschließmechanismus ausgebildet sein. Ein solcher Kombinationsschließmechanismus kann mehrere um eine Drehachse drehbare Coderinge aufweisen, mittels derer ein beispielsweise aus einer Zahlen-, Symbol- oder Farbfolge bestehendes Schließgeheimnis gewählt und eingestellt werden kann, um das mit dem Verriegelungsmechanismus verbundene Verriegelungselement von diesem lösen zu können. Durch ein Verstellen des Schließgeheimnisses kann das Verriegelungselement hingegen an dem Verriegelungsmechanismus verriegelt werden. Insbesondere kann ein solcher Kombinationsschließmechanismus ohne Schlüssel bedient werden, so dass auch auf das Mitführen eines solchen zur Verwendung des Schlosses verzichtet und der Gefahr, das Schloss bei einem Verlust eines Schlüssels nicht mehr verwenden zu können, entgegengewirkt werden kann.

Der Schlosskörper kann eine Halterung für den Verriegelungsmechanismus und/oder das Verriegelungselement aufweisen. Dadurch können das Verriegelungselement und der Verriegelungsmechanismus, insbesondere während eines Transports bzw. während einer Fahrt mit dem Fahrrad, sicher mit dem Schlosskörper verbunden werden, um beispielsweise eine Geräuschbildung oder eine Beschädigung aufgrund eines Anschlagens der genannten Elemente an dem Schlosskörper verhindern zu können.

Die Halterung kann zumindest teilweise elastisch verformbar ausgebildet sein und insbesondere derart, dass der Verriegelungsmechanismus und/oder das Verriegelungselement in die Halterung einclipsbar sind bzw. ist. Dadurch können das Verriegelungselement bzw. der Verriegelungsmechanismus einfach und schnell mit der Halterung verbunden bzw. aus dieser entnommen werden, um entweder eine kompakte Anordnung des Schlosses während eines Transports oder eine schnelle Verfügbarkeit zum Sichern, insbesondere eines Fahrrads, erreichen zu können.

Die Erfindung betrifft ferner ein Fahrrad umfassend einen Fahrradrahmen mit zwei Gewindebohrungen zur Befestigung eines Flaschenhalters, einen Flaschenhalter, welcher mittels zweier den Gewindebohrungen zugeordneten Befestigungsschrauben an dem Fahrradrahmen befestigt ist, und ein Schloss wie voran stehend beschrieben, welches zwischen dem Flaschenhalter und dem Fahrradrahmen angeordnet und mittels der Befestigungsschrauben an dem Fahrradrahmen angebracht ist. Ein derartig an dem Fahrrad angeordnetes Schloss kann in einfacher Weise transportiert und ohne Einschränkungen hinsichtlich der sonstigen Nutzung des Fahrrads bzw. ohne einen unangemessenen großen Platz zu beanspruchen zur komfortablen und schnellen Sicherung des Fahrrads genutzt werden. Ferner kann ein solches Schloss in der beschriebenen Anordnung komfortabel mittels der ohnehin für den Flaschenhalter vorgesehenen Gewindebohrungen an einem Fahrradrahmen angebracht werden, ohne dass dazu spezielle Vorkehrungen notwendig sind.

Die Erfindung wird im Folgenden rein beispielhaft anhand eines Ausführungsbeispiels unter Bezugnahme auf die Zeichnungen beschrieben. Es zeigen:
- Fig. 1: eine perspektivische Ansicht eines Schlosses im vollständig montierten Zustand,
- Fig. 2: eine perspektivische Ansicht des Schlosses bei abgenommenen Gehäusevorderteil,
- Fig. 3: eine perspektivische Ansicht einer Anordnung aus einem Flaschenhalter und dem Schloss zu deren gemeinsamer Anbringung an einem Fahrradrahmen,
- Fig. 4: eine Vorderansicht des gemeinsam mit dem Flaschenhalter an einem Fahrradrahmen angebrachten Schlosses, und
- Fig. 5A und 5B: jeweilige schematische Darstellungen eines Abschnitts eines Schlosskörpers zur Veranschaulichung einer möglichen Ausbildung einer Arretiereinrichtung.

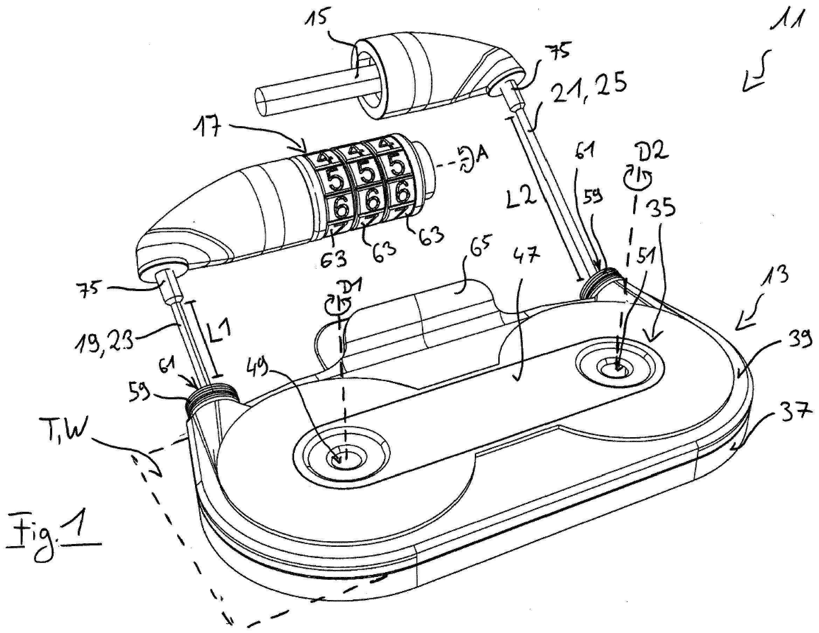

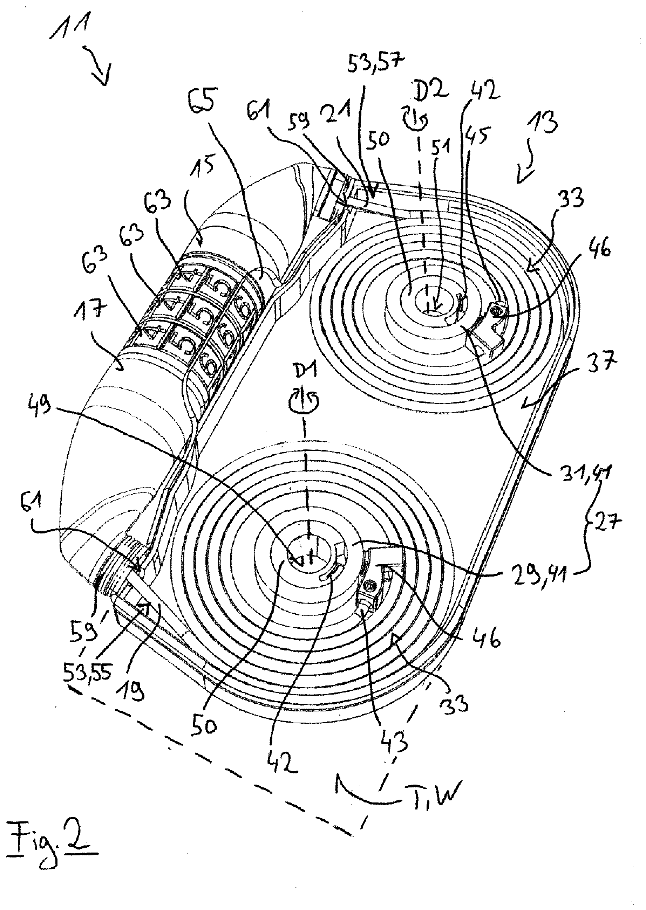

Fig. 1 zeigt eine perspektivische Vorderansicht eines Schlosses 11, welches einen Schlosskörper 13 sowie einen außerhalb des Schlosskörpers 13 angeordneten Verriegelungsmechanismus 17 und ein ebenfalls außerhalb des Schlosskörpers 13 angeordnetes Verriegelungselement 15 aufweist. Der Verriegelungsmechanismus 17 ist dabei durch einen ersten Seilabschnitt 19 und das Verriegelungselement 15 durch einen zweiten Seilabschnitt 21 mit dem Schlosskörper 13 verbunden, wobei die Seilabschnitte 19 und 21 insbesondere durch Drahtseile gebildet sein können. Ferner ist der Verriegelungsmechanismus 17 dazu ausgebildet, das Verriegelungselement 15 aufzunehmen und zu verriegeln, um aus dem Schlosskörper 13 und den Seilabschnitten 19 und 21 eine geschlossene Schlaufe bilden und ein Fahrrad an einem ortsfesten Gegenstand sichern zu können (vgl. auch Fig. 2 bis 4).

Der Verriegelungsmechanismus 17 ist als Kombinationsschließmechanismus ausgebildet und weist drei Coderinge 63 auf, die um eine Drehachse A drehbar sind. Mittels dieser Coderinge 63 kann ein aus drei Ziffern bestehendes Schließgeheimnis ein- bzw. verstellt werden. Während das mit dem Verriegelungsmechanismus 17 verbundene Verriegelungselement 15 durch Einstellen des Schließgeheimnisses von dem Verriegelungsmechanismus 17 gelöst werden kann (vgl. Fig. 1), kann das Verriegelungselement 15 durch ein Drehen der Coderinge 63 und Verstellen des Schließgeheimnisses sicher an dem Verriegelungsmechanismus 17 verriegelt werden (vgl. Fig. 2 bis 4).

Der erste Seilabschnitt 19 und der zweite Seilabschnitt 21 laufen ferner durch jeweilige Einführöffnungen 61 in den Schlosskörper 13 hinein. Dabei sind die Länge L1 des außerhalb des Schlosskörpers 13 verlaufenden Teils 23 des ersten Seilabschnitts 19 sowie die Länge L2 des außerhalb des Schlosskörpers 13 verlaufenden Teils 25 des zweiten Seilabschnitts 21 wahlweise und unabhängig voneinander veränderbar, indem der erste Seilabschnitt 19 und der zweite Seilabschnitt 21 aus dem Schlosskörper 13 herausgezogen werden können.

Dies ermöglicht es, beispielsweise die Länge L2 des außerhalb des Schlosskörpers 13 verlaufenden Teils 25 des zweiten Seilabschnitts 21 so zu vergrößern, dass das Verriegelungselement 15 um einen ortsfesten Gegenstand, wie eine Laterne oder einen Fahrradständer, geführt und daraufhin mit dem Verriegelungsmechanismus 17 verbunden werden kann, um ein Fahrrad durch die vom Schloss 11 gebildete Schlaufe an dem Gegenstand zu sichern. Indem auch die Länge L1 und damit der Abstand zwischen dem Verriegelungsmechanismus 17 und dem Schlosskörper 13 veränderbar ist, können beide Seilabschnitte 19 und 21 flexibel beliebig weit aus dem Schlosskörper 13 herausgezogen werden, sodass der Verriegelungsmechanismus 17 und das Verriegelungselement 15 beispielsweise hinter einem zum Sichern verwendeten Gegenstand zusammengeführt und dort miteinander verbunden werden können.

Der Schlosskörper 13 bildet ein Gehäuse 35 für die in Fig. 1 nicht sichtbaren, innerhalb des Schlosskörpers 13 verlaufenden Teile der Seilabschnitte 19 und 21, so dass diese Teile vor einem externen Zugriff geschützt sind. Dabei weist das Gehäuse 35 ein Gehäusevorderteil 39 und ein Gehäuserückteil 37 auf, die entlang einer Teilungsebene T miteinander verbunden sind. Die Einführöffnungen 61, durch welche der erste Seilabschnitt 19 und der zweite Seilabschnitt 21 in den Schlosskörper 13 hineinlaufen, sind mit jeweiligen Dichtungselementen 59 abgedichtet, um einen Eintritt von Wasser oder Verschmutzungen in das Innere des Schlosskörpers 13 und eine dadurch bedingte Beschädigung der im Schlosskörper 13 angeordneten Komponenten zuverlässig verhindern zu können. Ferner sind die Dichtungselemente 59, die insbesondere aus einem Gummi oder einem weichen Kunststoff gefertigt sein können, dazu ausgebildet, einen jeweiligen Kontaktabschnitt 75 des Verriegelungsmechanismus 17 bzw. des Verriegelungselementes 15 formschlüssig aufzunehmen, um einem störenden Klappern aufgrund eines Aneinanderschlagens dieser Elemente 15 und 17 aneinander oder an dem Schlosskörper 13 während eines Transports des Schlosses 11 entgegenwirken zu können (vgl. auch Fig. 2 bis 4).

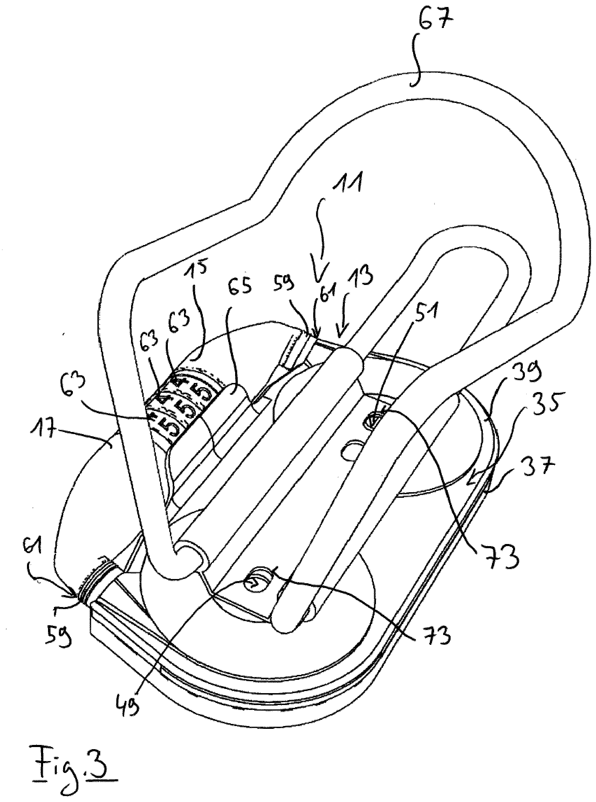

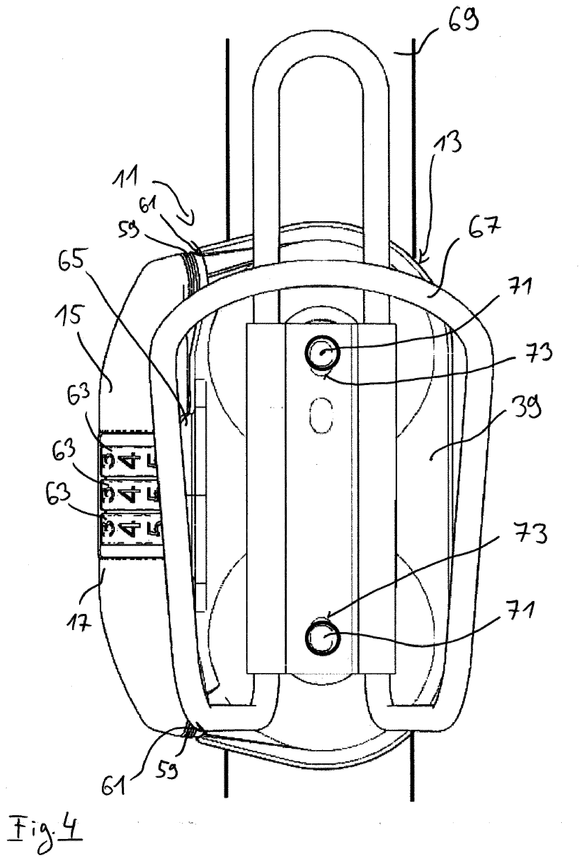

Ferner weist der Schlosskörper 13 einen ersten Befestigungskanal 49 und einen zweiten Befestigungskanal 51 auf, durch welche Befestigungsschrauben 71 zur Befestigung des Schlosses 11 hindurchgeführt werden können. Der Abstand zwischen den beiden Befestigungskanälen 49 und 51 ist dabei insbesondere derart gewählt, dass das Schloss 11 mittels der Befestigungsschrauben 71 an einem Fahrradrahmen 69 befestigt werden kann, indem die Befestigungsschrauben 71 in an dem Fahrradrahmen 69 ausgebildete und zum Anbringen eines Flaschenhalters 67 ohnehin vorgesehene Gewindebohrungen eingeschraubt werden (vgl. Fig. 4). Insbesondere kann das Schloss 11 dabei in platzsparender Weise gemeinsam mit dem Flaschenhalter 67 an dem Fahrradrahmen 69 befestigt werden, wobei das Schloss 11 zwischen dem Flaschenhalter 67 und dem Fahrradrahmen 69 angeordnet werden kann (vgl. Fig. 3 und 4). Dazu können die zum Durchführen von Befestigungsschrauben 71 vorgesehenen Langlöcher 73 des Flaschenhalters 67 in Flucht zu den Befestigungskanälen 49 und 51 angeordnet werden, sodass die Befestigungsschrauben 71 durch die Langlöcher 73 und die Befestigungskanäle 49 und 51 geführt werden können, um sowohl den Flaschenhalter 67 als auch das Schloss 11 an dem Fahrradrahmen 69 anzubringen. Dadurch kann das Schloss 11 in einfacher Weise während einer Fahrt mit dem Fahrrad mitgeführt werden, ohne dass dessen Anbringung an dem Fahrradrahmen 69 spezieller Vorkehrungen bedarf oder die Nutzung des Fahrrads einschränkt.

Während es die in Fig. 1 gezeigte getrennte Anordnung von Verriegelungsmechanismus 17 und Verriegelungselement 15 ermöglicht, die damit verbundenen Seilabschnitte 19 und 21 bis zu einer jeweiligen gewünschten Länge L1 bzw. L2 aus dem Schlosskörper 13 herauszuziehen, um mittels des Schlosses 11 eine Schlaufe zu bilden, zeigen die Fig. 2 bis 4 eine kompakte Anordnung des Schlosses 11 bei mit dem Verriegelungsmechanismus 17 verbundenen Verriegelungselement 15. Diese Anordnung kann insbesondere während eines Transports des Schlosses 11 vorgesehen sein. Die Seilabschnitte 19 und 21 sind dabei vollständig in den Schlosskörper 13 eingezogen, so dass der Verriegelungsmechanismus 17 und das Verriegelungselement 15 in möglichst geringem Abstand zu dem Schlosskörper 13 angeordnet sind. Ferner sind der Verriegelungsmechanismus 17 und das damit verbundene Verriegelungselement 15 in eine an dem Schlosskörper 13 ausgebildete Halterung 65 eingeclipst, wozu diese Halterung 65 an die Form des Verriegelungsmechanismus 17 und des Verriegelungselements 15 angepasst und zumindest teilweise elastisch ausgebildet ist. Durch diese Aufnahme des Verriegelungsmechanismus 17 und des Verriegelungselements 15 in der Halterung 65 kann insbesondere eine Geräuschbildung während eines Transports des Schlosses 11, beispielsweise während einer Fahrt mit dem Fahrrad, aufgrund eines Klapperns von Komponenten des Schlosses 11 aneinander verhindert werden.

Wie aus Fig. 2 ersichtlich wird, die das Schloss 11 bei abgenommenem Gehäusevorderteil 39 zeigt, mündet der erste Seilabschnitt 19 innerhalb des Schlosskörpers 13 in ein erstes Seilende 43, welches über ein Befestigungselement 46 mit einer ersten Spule 29 verbunden ist. Gleichermaßen mündet der zweite Seilabschnitt 21 in ein zweites Seilende 45, welches über ein zugeordnetes Befestigungselement 46 mit einer zweiten Spule 31 verbunden ist. Beide Spulen 29 und 31 werden von als Spiralfedern ausgebildeten Federn 41 gebildet, die um eine erste Drehachse D1 bzw. eine zweite Drehachse D2 verdrehbar sind.

Ausgehend von dem ersten Seilende 43 bzw. dem zweiten Seilende 45 sind der erste Seilabschnitt 19 und der zweite Seilabschnitt 21 in jeweiligen Wicklungen 33 um die zugehörige Spule 29 bzw. 31 innerhalb des Schlosskörpers 13 angeordnet. Dabei sind die Spulen 29 und 31 an einer Außenseite jeweiliger, von dem Schlosskörper 13 gebildeter Begrenzungen 50 angeordnet, deren Innenseiten die Befestigungskanäle 49 bzw. 51 definieren. Die innenliegenden Federenden 42 der Spulen 29 und 31 bzw. der diese bildenden Federn 41 sind mit den Begrenzungen 50 verbunden, sodass die Federkraft der Federn 41 einem Abwickeln bzw. Herausziehen des zugeordneten Seilabschnitts 19 oder 21 aus dem Schlosskörper 13 entgegenwirkt. Damit bilden die Spulen 29 und 31 eine Einzieheinrichtung 27, mittels derer die Seilabschnitte 19 und 21 automatisch in den Schlosskörper 13 hineingezogen werden können.

Durch dieses Einziehen kann erreicht werden, dass die Seilabschnitte 19 und 21 bei einer Überführung des Schlosses 11 in den in den Fig. 2 bis 4 dargestellten Transportzustand kontrolliert und automatisch in den Schlosskörper 13 eingezogen und dort kompakt und platzsparend aufgewickelt werden. Die Wicklungen 33 der Seilabschnitte 19 und 21 sind dabei in einer gemeinsamen Wicklungsebene W angeordnet, so dass sich die Wicklungen 33 spiralförmig um die jeweilige Drehachse D1 oder D2 erstrecken und eine minimale Ausdehnung in Richtung der parallel zueinander ausgerichteten Drehachsen D1 und D2 aufweisen. Dadurch kann auch der Schlosskörper 13 in dieser Richtung mit einer geringen Ausdehnung und das Gehäuse 35 entsprechend flach ausgebildet werden, so dass das Schloss 11 komfortabel zwischen dem Fahrradrahmen 69 und dem Flaschenhalter 67 angebracht werden kann, ohne dass das Verwenden des Flaschenhalters 67 dadurch beeinträchtigt wird (vgl. Fig. 3 und 4). Die Anordnung der Seilabschnitte19 und 21 in spiralförmig verlaufenden Wicklungen 33 innerhalb des Schlosskörpers 13 ermöglicht es ferner, verhältnismäßig lange Seilabschnitte 19 und 21 innerhalb des Schlosskörpers 13 bei vergleichsweise geringem Platzbedarf in der Wicklungsebene W anzuordnen.

In der in Fig. 2 gezeigten Ausführungsform ist die Einzieheinrichtung 27 derart ausgebildet, dass die Spulen 29 und 31 dauerhaft eine in den Schlosskörper 13 hinein gerichtete Kraft auf die Seilabschnitte 19 und 21 ausüben. Alternativ dazu kann es vorgesehen sein, die Einzieheinrichtung 27 mit einer (nicht dargestellten) Arretiereinrichtung 53 auszubilden, die eine erste Blockiereinrichtung 55 für den ersten Seilabschnitt 19 und eine zweite Blockiereinrichtung 57 für den zweiten Seilabschnitt 21 umfasst. Mögliche Positionen zur Anordnung einer solchen Arretiereinrichtung 53 in dem Schlosskörper 13 sind durch die den Bezugszeichen zugeordneten Pfeile angedeutet. Solche Blockiereinrichtungen 55 und 57 können beispielsweise dazu vorgesehen sein, die Seilabschnitte 19 und 21 unabhängig voneinander bei einer gewünschten Länge L1 oder L2 der außerhalb des Schlosskörpers 13 verlaufenden Teile 23 und 25 zu blockieren (vgl. Fig. 1). Dazu können die Blockiereinrichtungen 55 und 57 ein jeweiliges Blockierelement umfassen, welches infolge eines kontinuierlichen Herausziehens des zugeordneten Seilabschnitts 19 bzw. 21 aus dem Schlosskörper 13 heraus in Eingriff mit dem jeweiligen Seilabschnitt 19 bzw. 21 gelangt, um ein Hineinziehen dessen aufgrund der von der Einzieheinrichtung 27 ausgeübten Kraft zu verhindern. Ein solches Blockierelement kann beispielsweise durch ein bewusstes, ruck- bzw. impulsartiges Ziehen eines Nutzers an den jeweiligen Seilabschnitten 19 bzw. 21, ähnlich wie bei einem Rollladen, außer Eingriff mit dem Seilabschnitt 19 oder 21 gebracht werden, so dass der Seilabschnitt 19 bzw. 21 in den Schlosskörper 13 hineingezogen und um die jeweilige Spule 29 oder 31 gewickelt werden kann.

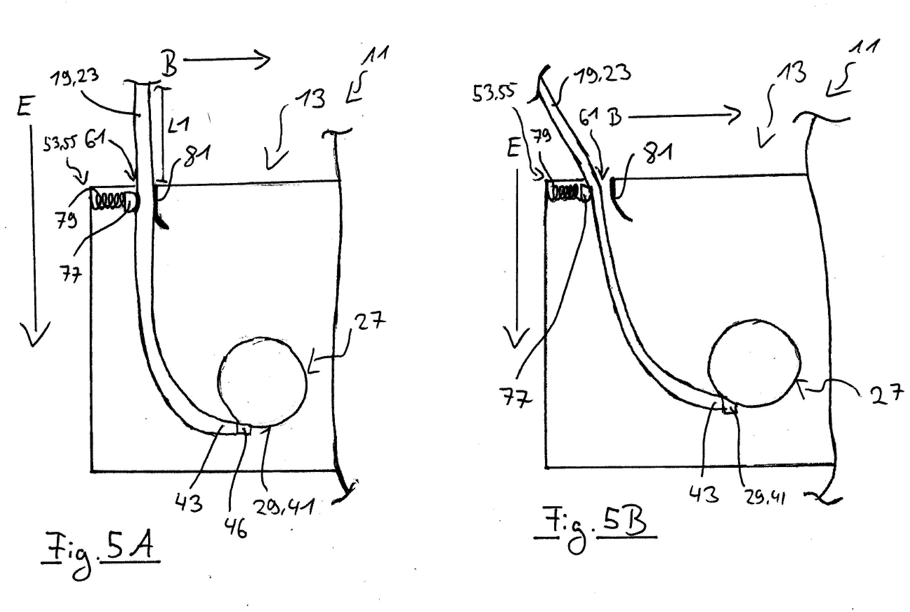

Eine weitere Möglichkeit zur Ausbildung einer Arretiereinrichtung 53 veranschaulichen die Figuren 5A und 5B. Diese zeigen jeweilige schematische Darstellungen eines Abschnitts eines Schlosskörpers 13 eines Schlosses 11, in welchen ein erster Seilabschnitt 19 durch eine Eintrittsöffnung 61 hineinläuft. Wiederum ist der erste Seilabschnitt 19 mit einem ersten Seilende 43 über ein Befestigungselement 46 mit einer als Spiralfeder 41 ausgebildeten ersten Spule 29 verbunden, die eine in den Schlosskörper 13 hinein gerichtete Kraft auf den ersten Seilabschnitt 19 ausübt. Die Spule 29 ist dadurch Bestandteil einer Einzieheinrichtung 27, die ein automatisches Einziehen des Seilabschnitts 19 in den Schlosskörper 13 und dessen kompaktes Anordnen in Wicklungen 33 um die Spule 29 ermöglicht (vgl. Fig. 2).

Wie Fig. 5A zeigt, weist der Schlosskörper 13 ein im Bereich der Eintrittsöffnung 61 angeordnetes Blockierelement 77 als Teil einer für den ersten Seilabschnitt 19 vorgesehenen Blockiereinrichtung 55 auf, welches mittels einer Vorspannfeder 79 in einer Blockierrichtung B federvorgespannt ist. Die Blockierrichtung B ist dabei senkrecht zu einer geradlinigen Eintrittsrichtung E ausgerichtet, entlang welcher der erste Seilabschnitt 19 in den Schlosskörper 13 hineinläuft. Aufgrund der Federvorspannung drückt das Blockierelement 77 den ersten Seilabschnitt 19 gegen eine von dem Schlosskörper 13 gebildete Gehäuseinnenwand 81, sodass der Seilabschnitt 19 zwischen dem Blockierelement 77 und der Gehäuseinnenwand 81 eingeklemmt ist. Dadurch kann die von der Einzieheinrichtung 27 auf den Seilabschnitt 19 ausgeübte Einziehwirkung blockiert und dessen außerhalb des Schlosskörpers 13 verlaufender Teil 23 bei einer gewünschten Länge L1 festgehalten werden.

Um den ersten Seilabschnitt 19 wahlweise, beispielsweise vor einem Transport des Schlosses 11, mittels der Einzieheinrichtung 27 in den Schlosskörper 13 einziehen und kompakt anordnen zu können, kann ein Nutzer den Seilabschnitt 19 in eine in Fig. 5B gezeigte schräge Ausrichtung zu der Eintrittsrichtung E bringen, um eine entgegen der Blockierrichtung B wirkende Kraft auf das Blockierelement 77 zu übertragen und das Blockierelement 77 entgegen der Vorspannung der Vorspannfeder 79 zurückzudrängen. Dadurch kann das Klemmen des Seilabschnitts 19 zwischen dem Blockierelement 77 und der Gehäuseinnenwand 81 ausgesetzt werden, sodass der Seilabschnitt 19 kontrolliert und kontinuierlich eingezogen und dabei um die Spule 27 aufgewickelt werden kann. Alternativ dazu kann an einer Außenseite des Schlosskörpers 13 ein Knopf bzw. Taster vorgesehen sein, um ein solches federvorgespanntes Blockierelement 77 wahlweise zurückdrängen zu können.

Ein in gleicher Art wie das Blockierelement 77 ausgebildetes weiteres Blockierelement als Teil einer zweiten Blockiereinrichtung 57 kann für einen in den Schlosskörper 13 hineinlaufenden zweiten Seilabschnitt 21 vorgesehen sein, sodass die erste Blockiereinrichtung 55 und die zweite Blockiereinrichtung 57 die Arretiereinrichtung 53 bilden können (vgl. auch Fig. 2).

Das Schloss 11 erlaubt eine äußerst kompakte Anordnung direkt an dem Fahrradrahmen 69 und bietet damit insbesondere für vornehmlich sportlich genutzte Fahrräder, wie Rennräder oder Mountainbikes, eine komfortable Sicherungsmöglichkeit ohne Einschränkungen sonstiger Funktionen. Insbesondere können die Seilabschnitte 19 bzw. 21 dabei verhältnismäßig dünn und das Schloss 11 dadurch mit geringem Gewicht ausgebildet sein, um solche Fahrräder in kurzen Pausen ausreichend vor einem unerlaubten Wegfahren bzw. Wegnehmen schützen zu können, ohne dass das Schloss 11 ein unangemessen großes Zusatzgewicht darstellt.

### Bezugszeichenliste

- 11: Schloss
- 13: Schlosskörper
- 15: Verriegelungselement
- 17: Verriegelungsmechanismus
- 19: erster Seilabschnitt
- 21: zweiter Seilabschnitt
- 23: außerhalb des Schlosskörpers verlaufender Teil des ersten Seilabschnittes
- 25: außerhalb des Schlosskörpers verlaufender Teil des zweiten Seilabschnittes
- 27: Einzieheinrichtung
- 29: erste Spule
- 31: zweite Spule
- 33: Wicklungen
- 35: Gehäuse
- 37: Gehäuserückteil
- 39: Gehäusevorderteil
- 41: Feder
- 42: befestigtes Federende
- 43: erstes Seilende
- 45: zweites Seilende
- 46: Befestigungselement
- 47: Verbindungselement
- 49: erster Befestigungskanal
- 50: Begrenzung
- 51: zweiter Befestigungskanal
- 53: Arretiereinrichtung
- 55: erste Blockiereinrichtung
- 57: zweite Blockiereinrichtung
- 59: Dichtungselement
- 61: Eintrittsöffnung
- 63: Codering
- 65: Halterung
- 67: Flaschenhalter
- 69: Fahrradrahmen
- 71: Befestigungsschraube
- 73: Langloch
- 75: Kontaktabschnitt
- 77: Blockierelement
- 79: Vorspannfeder
- 81: Gehäuseinnenwand

- A: Drehachse der Coderinge
- B: Blockierrichtung
- E: Eintrittsrichtung
- D1: erste Drehachse
- D2: zweite Drehachse
- L1: Länge des außerhalb des Schlosskörpers verlaufenden Teils des ersten Seilabschnitts
- L2: Länge des außerhalb des Schlosskörpers verlaufenden Teils des zweiten Seilabschnitts
- T: Teilungsebene
- W: Wicklungsebene

## Patentansprüche

1. Schloss (11), insbesondere Fahrradschloss, mit
einem Schlosskörper (13),
einem außerhalb des Schlosskörpers (13) befindlichen Verriegelungselement (15) und
einem außerhalb des Schlosskörpers (13) befindlichen Verriegelungsmechanismus (17) zur Aufnahme und Verriegelung des Verriegelungselements (15),
wobei der Verriegelungsmechanismus (17) durch einen ersten Seilabschnitt (19) mit dem Schlosskörper (13) verbunden ist und das Verriegelungselement (15) durch einen zweiten Seilabschnitt (21) mit dem Schlosskörper (13) verbunden ist,
wobei die Länge (L1, L2) eines außerhalb des Schlosskörpers (13) verlaufenden Teils (23, 25) wenigstens eines der Seilabschnitte (19, 21) veränderbar ist.

2. Schloss (11) nach Anspruch 1,
wobei die Länge (L1, L2) eines außerhalb des Schlosskörpers (13) verlaufenden Teils (23, 25) jedes Seilabschnittes (19, 21) veränderbar ist.

3. Schloss (11) nach Anspruch 1 oder 2,
wobei der oder jeder Seilabschnitt (19, 21) zur Veränderung der Länge (L1, L2) seines außerhalb des Schlosskörpers (13) verlaufenden Teils (23, 25) aus dem Schlosskörper (13) herausziehbar ist.

4. Schloss (11) nach einem der vorhergehenden Ansprüche,
wobei der oder jeder Seilabschnitt (19, 21) mit einer innerhalb des Schlosskörpers (13) angeordneten Einzieheinrichtung (27) zum Einziehen des Seilabschnitts (19, 21) verbunden ist.

5. Schloss (11) nach Anspruch 4,
wobei die Einzieheinrichtung (27) eine Spule (29, 31) zum Aufwickeln des wenigstens einen Seilabschnittes (19, 21) und insbesondere eine erste Spule (29) zum Aufwickeln des ersten Seilabschnittes (19) und eine zweite Spule (31) zum Aufwickeln des zweiten Seilabschnittes (21) aufweist.

6. Schloss (11) nach Anspruch 5,
wobei die oder jede Spule (29, 31) eine Feder (41) umfasst, deren Federkraft einem Abwickeln des zugeordneten Seilabschnittes (19, 21) entgegenwirkt, wobei die Feder (41) insbesondere als Spiralfeder ausgebildet ist.

7. Schloss (11) nach Anspruch 5 oder 6,
wobei die Wicklung (33) des oder jedes aufgewickelten Seilabschnitts (19, 21) jeweils in einer Wicklungsebene (W) liegt, insbesondere wobei alle Wicklungen (33) in einer gemeinsamen Wicklungsebene (W) liegen.

8. Schloss (11) nach Anspruch 7,
wobei der Schlosskörper (13) ein Gehäuse (25) für die oder jede Spule (29, 31) und den oder jeden aufgewickelten Seilabschnitt (19, 21) bildet, wobei das Gehäuse (35) ein Gehäuserückteil (27) und ein Gehäusevorderteil (39) aufweist, welche entlang einer Teilungsebene (T) miteinander verbunden sind, wobei die Teilungsebene (T) parallel zu der Wicklungsebene (W) ausgerichtet ist oder in der Wicklungsebene (W) liegt.

9. Schloss (11) nach einem der Ansprüche 4 bis 8,
wobei die Einzieheinrichtung (27) eine Arretiereinrichtung (53) umfasst, welche dazu ausgebildet ist, das Einziehen des oder jedes Seilabschnittes (19, 21) zu blockieren,
insbesondere wobei die Arretiereinrichtung (53) eine erste Blockiereinrichtung (55) für den ersten Seilabschnitt (19) aufweist, welche dazu ausgebildet ist, den außerhalb des Schlosskörpers (13) verlaufenden Teil (23) des ersten Seilabschnittes (19) bei einer vorgebbaren Länge (L1) zu blockieren, und wobei die Arretiereinrichtung (53) eine zweite Blockiereinrichtung (57) für den zweiten Seilabschnitt (21) aufweist, welche dazu ausgebildet ist, den außerhalb des Schlosskörpers (13) verlaufenden Teil (25) des zweiten Seilabschnittes (21) bei einer vorgebbaren Länge (L2) zu blockieren.

10. Schloss (11) nach einem der vorhergehenden Ansprüche,
wobei der oder jeder Seilabschnitt (19, 21) innerhalb des Schlosskörpers (13) in ein Seilende (43, 45) mündet, welches mit einer um eine Drehachse (D1, D2) verdrehbaren Spule (29, 31) verbunden ist.

11. Schloss (11) nach einem der vorhergehenden Ansprüche,
wobei der erste Seilabschnitt (19) innerhalb des Schlosskörpers (13) in ein erstes Seilende (43) mündet, welches mit einer um eine erste Drehachse (D1) verdrehbaren ersten Spule (29) verbunden ist, und wobei der zweite Seilabschnitt (21) innerhalb des Schlosskörpers (13) in ein zweites Seilende (45) mündet, welches mit einer um eine zweite Drehachse (D2) verdrehbaren zweiten Spule (31) verbunden ist.

12. Schloss (11) nach Anspruch 11,
wobei die erste Drehachse (D1) und die zweite Drehachse (D2) parallel zueinander ausgerichtet sind und der Abstand der ersten Drehachse (D1) zu der zweiten Drehachse (D2) zwischen 60 mm und 70 mm, insbesondere etwa 65 mm, beträgt; und/oder
wobei die erste Spule (29) und die zweite Spule (31) über ein Verbindungselement (47), insbesondere eine Metallplatte, miteinander verbunden sind; und/oder
wobei der Schlosskörper (13) einen ersten Befestigungskanal (49) und einen zweiten Befestigungskanal (51) zum Durchführen von Befestigungsschrauben (71) aufweist, wobei der erste Befestigungskanal (49) koaxial zu der ersten Drehachse (D1) und der zweite Befestigungskanal (51) koaxial zu der zweiten Drehachse (D2) verläuft.

13. Schloss (11) nach einem der vorhergehenden Ansprüche,
wobei Dichtungselemente (59) zum Abdichten von Eintrittsöffnungen (61) der Seilabschnitte (19, 21) in den Schlosskörper (13) vorgesehen sind; und/oder
wobei der Verriegelungsmechanismus (17) als Kombinationsschließmechanismus ausgebildet ist.

14. Schloss (11) nach einem der vorhergehenden Ansprüche,
wobei der Schlosskörper (13) eine Halterung (65) für den Verriegelungsmechanismus (17) und/oder das Verriegelungselement (15) aufweist, insbesondere wobei die Halterung (65) zumindest teilweise elastisch verformbar ausgebildet ist, insbesondere derart, dass der Verriegelungsmechanismus (17) und/oder das Verriegelungselement (15) in die Halterung (65) einclipsbar sind bzw. ist.

15. Fahrrad umfassend
einen Fahrradrahmen (69) mit zwei Gewindebohrungen zur Befestigung eines Flaschenhalters (67),
einen Flaschenhalter (67), welcher mittels zweier den Gewindebohrungen zugeordneten Befestigungsschrauben (71) an dem Fahrradrahmen (69) befestigt ist, und
ein Schloss (11) nach einem der vorhergehenden Ansprüche, welches zwischen dem Flaschenhalter (67) und dem Fahrradrahmen (69) angeordnet und mittels der Befestigungsschrauben (71) an dem Fahrradrahmen (69) angebracht ist.
